# EUROPEAN PATENT APPLICATION

(11) **EP 1 696 012 A2**
(43) Date of publication of application: **30.08.2006**
(21) Application number: 06002982.4
(22) Date of filing: 15.02.2006
(51) Int. Cl.: C09J 7/02, C09J 133/06

(54) **Adhesive sheet**

(30) Priority: 24.02.2005 JP 2005048804
(71) Applicant: Lintec Corporation, Tokyo (JP)
(72) Inventor: Tetsumoto, Takuya, Warabi-shi Saitama (JP); Ikeda, Fuminori, Warabi-shi Saitama (JP)
(74) Representative: Leifert & Steffan

(57) **Abstract**

There is disclosed an adhesive sheet comprising an adhesive agent layer formed on a support film containing a plasticizer, and composed of an emulsion which is obtained by subjecting a mixture of ethylenically unsaturated monomers containing components (a) at least 48% by mass of butyl (meth)acrylate, (b) 6 to 22% by mass of methyl methacrylate and (c) 0.5 to 5% by mass of an ethylenically unsaturated carboxylic acid to emulsion polymerization in the presence of a reactive emulsifier in an amount of 0.5 to 5.0 parts by mass based on 100 parts by mass of the mixture of ethylenically unsaturated monomers, and which comprises a polymer having an average particle diameter in the range of 100 to 300 nm. The adhesive sheet is free form adherend contamination due to migration of a plasticizer from a support film containing the plasticizer to an adhesive agent layer, imparted with resistance to water and whitening, minimized in deterioration of adhesive force with the lapse of time, environmentally friendly and advantageous regarding the cost.

## Description

### BACKGROUND OF THE INVENTION

### 1. Field of the Invention

The present invention relates to an adhesive sheet to be used for various marking films, masking tapes and the like. More particularly, it pertains to an adhesive sheet which is lessened in degradation of adhesive force due to a plasticizer in spite of its being an adhesive sheet in which use is made of a support film containing a plasticizer having high migratory properties and a low molecular weight as well.

### 2. Description of the Related Arts

Many of marking films, masking tapes and adhesive sheets are each formed of a film which is composed of a polyvinyl chloride based resin containing a plasticizer and which is equipped with an adhesive agent layer, wherein the marking films are used for advertisement stickers, display stickers, signboards, window displays, vehicles, various towers / vessels, piping, machinery and equipment for a production plant; the masking tapes are used for sticking on non - coated regions at the time of coating on automobiles and various machinery and equipment; and the adhesive sheets are used as surface protection films of a variety of adherends.

However, the conventional sheet composed of the polyvinyl chloride based resin is greatly lowered in adhesive force with the lapse of time by the migration of a plasticizer contained in a film to an adhesive agent layer. In addition, in the case where an adherend is made of a coated steel plate or a plastic plate, the surfaces of the adherend is deformed through swelling because of the plasticizer running through the adhesive agent layer.

In order to solve the above - mentioned problems, there are proposed, for instance, (1) a method comprising subjecting in advance, a film to an undercoat treatment and thereafter installing thereon an adhesive agent layer (refer to Patent Literature Nos. 1 to 3) ; (2) a method comprising adding to vinyl chloride, a plasticizer in the form of liquid together with an acrylic resin having a low molecular weight, ethylene / vinyl acetate copolymer, ethylene / vinyl acetate / carbon monoxide copolymer and the like (refer to Patent Literature Nos. 4 to 6) ; (3) a method comprising forming on surfaces of a support film for a vinyl chloride based resin film, an undercoat layer composed principally of a polymer having isobutylene moiety as a main ingredient, or alternatively incorporating a polymer having isobutylene moiety as a main ingredient in an adhesive (refer to Patent Literature No. 7) ; (4) a method comprising using a polyurethane based substrate as a base polymer for a support film (refer to Patent Literature No. 8); and further (5) an aqueous emulsion which is formed by the use of a specific reactive emulsifier as an aqueous emulsion type pressure sensitive adhesive that provides high water resistance and high transparency and by subjecting to two stage emulsion polymerization reaction (refer to Patent Literature No. 9).

Nevertheless, the foregoing proposals involve the problems as described hereunder. Regarding the proposal (1), one production step must be increased for the purpose of undercoat treatment and besides, the component of the undercoat layer is an acrylic resin, ethylene / vinyl acetate copolymer, ethylene / acrylate copolymer or the like, each being close to the polarity of a plasticizer, thereby decreasing the effect on migration prevention, with the result that when an adhesive sheet is stuck on an adherend for a long period of time, the adhesive force deteriorates and / or the adherend is contaminated ; regarding the proposal (2), a large amount of any of the species must be blended in order to assure expected working effect, thus worsening the physical properties of a support film ; regarding the proposal (3), the use of an organic solvent in the undercoat layer or in the adhesive brings about environmental problems owing to the vaporization of the above-mentioned organic solvent; regarding the proposal (4), the polyurethane based substrate such as a urethane / acrylate copolymer film is expensive, whereby the adhesive sheet is also expensive ; and regarding the proposal (5), the two stage emulsion polymerization reaction leads to a complicated process of producing the emulsion, description is made only of the water resistance and transparency without describing anything of the influence of a plasticizer on the support film, and in the working example of the Patent Literature 9, use is made of a polypropylene film free from a plasticizer, whereby in the case of applying the adhesive having the composition of the working example to a support film containing a plasticizer, it is anticipated that the deterioration of the support film is caused by plasticizer bleeding.
[Patent Literature 1] Japanese Patent application Laid-Open No. 71427 / 1973 (Showa 48)
[Patent Literature 2] Japanese Patent application Laid-Open No. 83028 /1986 (Showa 61)
[Patent Literature 3] Japanese Patent application Laid-Open No. 173250 /1987 (Showa 62)
[Patent Literature 4] Japanese Patent application Laid-Open No. 4543/ 1985 (Showa 60)
[Patent Literature 5]Japanese Patent application Laid-Open No. 195146 / 1985 (Showa 60)
[Patent Literature 6] Japanese Patent application Laid-Open No. 195147/ 1985 (Showa 60)
[Patent Literature 7] Japanese Patent application Laid-Open No. 108017/ 1994 (Heisei 6)
[Patent Literature 8] Japanese Patent application Laid-Open No. 45671 / 1991 (Heisei 3)
[Patent Literature 9] Japanese Patent application Laid-Open No. 278837/ 1997 ( Heisei 9)

### SUMMARY OF THE INVENTION

The object of the present invention is to provide under such circumstances, an adhesive sheet which is free from adherend contamination due to plasticizer migration from a support film or the like, imparted with resistance to water and whitening, little in deterioration of the adhesive force with the lapse of time, besides environmentally friendly and at the same time, advantageous from the viewpoint of cost.

Other objects of the present invention will become obvious from the text of this specification hereinafter disclosed.

In the light of such circumstances, intensive extensive research and investigation were accumulated by the present inventors in order to achieve the above-mentioned objects. As a result, it has been discovered that the objects are achieved by an adhesive sheet in which an adhesive agent layer is formed on a support film containing a plasticizer, which is formed of an emulsion that has specific particle diameter and is obtained by subjecting a mixture of ethylenically unsaturated monomers having a specific chemical composition containing butyl (meth)acrylate, methyl methacrylate and an ethylenically unsaturated carboxylic acid to emulsion polymerization in the presence of a reactive emulsifier. The present invention has been accomplished by the foregoing findings and information.

That is to say, the present invention provides the following.
1. An adhesive sheet comprising an adhesive agent layer formed on a support film containing a plasticizer, and composed of an emulsion which is obtained by subjecting a mixture of ethylenically unsaturated monomers containing components (a), (b) and (c) to emulsion polymerization in the presence of a reactive emulsifier in an amount of 0.5 to 5.0 parts by mass based on 100 parts by mass of said mixture of ethylenically unsaturated monomers, and which comprises a polymer having an average particle diameter in the range of 100 to 300 nm, wherein said components contain the following
   (a) : butyl (meth)acrylate at least 48% by mass
   (b) : methyl methacrylate 6 to 22% by mass
   (c) : an ethylenically unsaturated carboxylic acid 0.5 to 5% by mass;
2. The adhesive sheet according to in the preceding item 1, wherein the support film containing a plasticizer is a film of a polyvinyl chloride based resin.
3. The adhesive sheet according to the preceding item 1 or 2, which has adhesive forces after allowed to stand at 80°C, 30% RH for 168 hours and at 50°C, 95% RH for 168 hours being at least 80%, respectively of the adhesive force after allowed to stand at 23°C, 50% RH for 168 hours.
4. The adhesive sheet according to any of the preceding items 1 to 3, which has a haze value of at most 40 after sticking said sheet on an acrylate plate and being immersed in warm water at 40°C for 72 hours.

### DESCRIPTION OF THE PREFERRED EMBODIMENTS

A film of a polyvinyl chloride based resin is generally used as a support film containing a plasticizer in the adhesive sheet according to the present invention, and is exemplified not only by a film of homopolymer of vinyl chloride but also a film of copolymer of vinyl chloride and any of various comonomers, which are exemplified for instance, by α - olefin such as ethylene, propylene and butylene, halogenated vinyl other than vinyl chloride such as vinyl fluoride, halogenated vinylidene such as vinylidene chloride and vinyl esters such as vinyl acetate and vinyl propionate.

In the present invention, the plasticizer contained in the polyvinyl chloride based resin film as the support film is not specifically limited, but may be a general plasticizer such as phthalic acid ester base. Plasticizers other than phthalic acid ester base are exemplified for instance, by plasticizers of adipic scid ester base, sebacic acid ester base, phospholic acid ester base, trimellitic acid ester base, citric acid ester base, epoxy base and polyester base. Plasticizers in the present invention may properly optionally contain at need, stabilizers, sliding agents, fillers, colorants, processing aids, softening agents, metallic powders, anti-clouding agent, ultraviolet absorbers, antioxidants, antistatic agents and flame retardants. Examples of usable stabilizers include those of Ba-Zn base, Cd-Ba base and Sn base, respectively, which may be used simultaneously with epoxidated soybean oil, epoxy resin or the like. Examples of usable softening agents include ethylene / vinyl acetate copolymer and ethylene / vinyl acetate / carbon monoxide copolymer.

In the adhesive agent layer of an adhesive sheet in the present invention, use is made of the emulsion obtained by subjecting a mixture of ethylenically unsaturated monomers comprising (a) butyl (meth)acrylate, (b) methyl methacrylate and (c) an ethylenically unsaturated carboxylic acid to emulsion polymerization in the presence of a reactive emulsifier.

The butyl (meth)acrylate as the component (a) is exemplified by n - butyl acrylate, n-butyl methacrylate, isobutyl acrylate and isobutyl methacrylate. The ethylenically unsaturated carboxylic acid as the component (c) is exemplified by acrylic acid, methacrylic acid, crotonic acid, itaconic acid, maleic acid, maleic acid anhydride and fumaric scid.

The mixture of ethylenically unsaturated monomers for obtaining the emulsion may be incorporated, in addition to the above - mentioned (a), (b) and (c), with (meth)acrylic alkyl esters (d) other than the components (a) and (b), with other functional monomers (e) and other monomers (f) as ethylenically unsaturated monomers other than the components (a), (b) and (c),

The above-mentioned (meth)acrylic alkyl esters (d) other than the components (a) and (b) are preferably (meth)acrylic alkyl esters wherein the alkyl group has 1 to 20 carbon atoms, and are specifically exemplified by methyl acrylate, ethyl (meth)acrylate, propyl (meth)acrylate, pentyl (meth)acrylate, hexyl (meth)acrylate, 2-ethylhexyl (meth)acrylate, octyl (meth)acrylate and lauryl (meth)acrylate. Any of the above-cited (meth)acrylic alkyl esters may be used alone or in combination with at least one other species.

Examples of the other functional monomers (e) include (meth)acrylic hydroxylalkyl esters such as 2-hydroxyethyl (meth)acrylate, 2-hydroxyproppyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate ; acetoacetoxymethyl(meth)acrylate ; acrylamides ; such as, acrylamide, methacrylamide, N-methyl (meth)acrylamide, N, N-dimethyl (meth)acrylamide, N-methylol (meth)acrylamide and diacetone (meth)acrylamide ; and mono- or di-alkylaminoalkyl (meth)acrylate such as mono- or di-methylaminoethyl (meth)acrylate, mono- or di-ethylaminoethyl (meth)acrylate, mono- or di-methylamino- propyl (meth)acrylate and mono- or di-ethylaminopropyl (meth)acrylate. Other examples thereof include multi-functional monomers such as di(meth)acrylic acid ethylene glycol and di(meth)acrylic acid propylene glycol; and alkoxysilyl group-containing monomers such as 2-(meth)acryloxyethyltrimethoxysilane and 2-(meth)acryloxyethyl- triethoxysilane. Any of the above-cited monomers may be used alone or in combination with at least one other species.

Examples of the other monomers (f) include acetoacetyls such as allyl acetoacetate ; vinyl esters such as vinyl acetate and vinyl propionate olefins such as ethylene, propylene and isobutylene ; halogenated olefins such as vinyl chloride and vinylidene chloride; styrenic monomers such as styrene and α -methylstyrene ; diene based monomers such as butadiene, isoprene and chloroprene ; and nitrile based monomers such as acrylonitrile and methacrylonitrile. Any of the above-cited monomers (f) may be used alone or in combination with at least one other species.

With regard to the chemical composition of a mixture of the ethylenically unsaturated monomers constituting the adhesive agent layer according to the present invention, the mixture preferably comprises at least 48%, preferably 50 to 90% by mass of butyl (meth)acrylate as the component (a) 6 to 22%, preferably 7 to 20% by mass of methyl methacrylate as the component (b) ; and 0.5 to 5%, preferably 0.8 to 3% by mass of an ethylenically unsaturated carboxylic acid as the component (c). The other ethylenically unsaturated monomer preferably comprises at most 40% by mass of sum total of the components (d), (e) and (f). In the case of using a (meth)acrylic alkyl ester wherein an alkyl group has 5 to 20 carbon atoms as the component (d), the (meth)acrylic alkyl ester is preferably contained in an amount of at most 35% by mass.

In the mixture of the ethylenically unsaturated monomers, by setting the content of the butyl (meth)acrylate as the component (a) on at least 48% by mass and also the content of the methyl methacrylate as the component (b) on at least 6% by mass, plasticizer resistance of the adhesive sheet is enhanced, thus enabling to preserve the adhesive force for a long period of time even in an environment of high humidity. Moreover by setting the content of the methyl methacrylate as the component (b) on at most 22% by mass, resistance to water and whitening thereof is enhanced and by setting the content of the ethylenically unsaturated carboxylic acid as the component (c) on at least 0.5% by mass, mechanical stability thereof is enhanced and also on at most 5% by mass, resistance to water and whitening can be maintained.

The adhesive agent layer of the adhesive sheet according to the present invention is formed by applying coating of the adhesive agent composition comprising as a base resin, an emulsion that is obtained by subjecting the above - mentioned mixture of the ethylenically unsaturated monomers to emulsion polymerization in the presence of a reactive emulsifier. In the emulsion polymerization, a reactive emulsifier is used, but a non-reactive emulsifier can be used in combination therewith in order to impart polymerization stability to the adhesive sheet. The reactive emulsifier and non - reactive emulsifier are not specifically limited, but may be properly optionally selected for use from previously well known ionic or nonionic emulsifier.

As the reactive emulsifier, there are preferably cited, for instance, the compounds represented by any of the general formulae (I) to (VII) 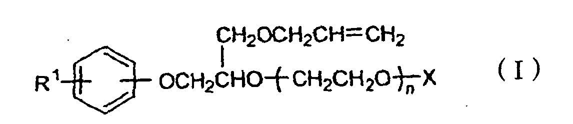 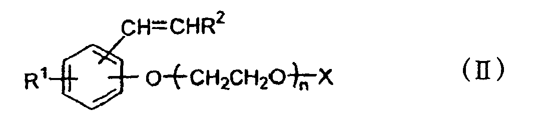 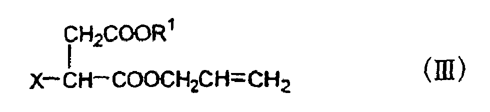 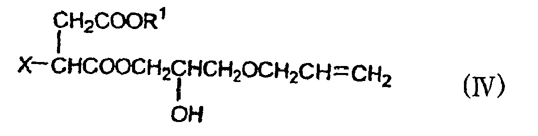 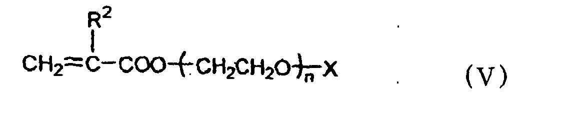 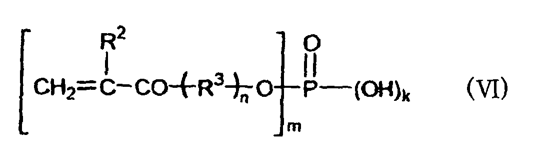 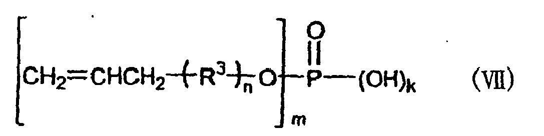 where R¹ is an alkyl group, R² is hydrogen atom or methyl group, R³ is an alkylene group, X is hydrogen atom or sulfonate group, n, m and k are each an integer of 1 or greater with the proviso that at m + k = 3.

Specific examples of the commercially available reactive emulsifier include ADEKARESOAP SE-20N (anionic), ADEKARESOAP SE-10N (anionic), ADEKARESOAP NE-10 (nonionic), ADEKARESOAP NE-20 (nonionic), ADEKARESOAP NE-30 (nonionic), ADEKARESOAP NE-40 (nonionic), ADEKARESOAP SDX-730 (anionic) and ADEKARESOAP SDX-731 (anionic) { manufactured by Asahi Denka Co., Ltd.} ; ELEMINOL JS-2 (anionic), ELEMINOL RS-30 (anionic) manufactured by Sanyo Chemical Industries Co., Ltd.} ; LATEMUL S-180A (anionic) and LATEMUL S-180 (anionic) { manufactured by Kao Corporation } ; Aquaron BC-05 (anionic), Aquaron BC-10 (anionic), Aquaron BC-20 (anionic), Aquaron HS-05 (anionic), Aquaron HS-10 (anionic), Aquaron HS-20 (anionic), Aquaron RN-10 (nonionic), Aquaron RN-20 (nonionic), Aquaron RN-30 (nonionic), Aquaron RN-50 (nonionic), New frontier S-510 (anionic) and New frontier A-229 E (anionic) {manufactured by Dai-ichi Kogyo Seiyaku Co., Ltd.} ; and Phosphynol TX (anionic) { manufactured by Toho Chemical Industry Co., Ltd.}. The above-mentioned reactive emulsifier may be used alone or in combination with at least one other species.

The amount of the reactive emulsifier to be used in the present invention is 0.5to 5.0, preferably 0.5 to 4.5 parts by mass based on 100 parts by mass of the mixture of ethylenically unsaturated monomers. By setting the amount of the reactive emulsifier on at least 0.5 part by mass based thereon, emulsion stability is enhanced, thus preventing generation of aggregate upon the polymerization and /or defective coating. In addition, by setting the amount of the reactive emulsifier on at most 5.0 parts by mass based thereon, resistance to water and whitening is enhanced, thus enabling to suppress the deterioration of the adhesive force under high humidity or at the time of being immersed in water.

In the case where a non - reactive emulsifier is used in combination, the suitable amount thereof to be used is at most 0.5 part by mass based on 1 part by mass of a reactive emulsifier.

In the following, some description will be given of a suitable embodiment of the process for producing an emulsion from the mixture of ethylenically unsaturated monomers.

In the first place, into an aqueous medium are added the mixture of ethylenically unsaturated monomers and a reactive emulsfier and as the case may be, a non-reactive emulsfier at a prescribed ratio, and an emulsifying treatment is carried out by the use of a high pressure homogenizer, ultrasonic wave or the like to prepare a emulsified liquid. Subsequently the emulsified liquid prepared in this manner is polymerized by being heated to about 40 to 90°C in the presence of a polymerization initiator. There are used as the polymerization initiator, previously well known species such as organic peroxides, azo base compounds, persulfates, a variety of redox catalysts and the like. The polymerization initiator may be allowed to be present in whole at the beginning of the reaction. Alternatively it may be allowed to be present in part thereat and the remainder may be added wholly or dividedly. In the foregoing manner an emulsion is obtainable from the mixture of ethylenically unsaturated monomers.

The polymer in the resultant emulsion preferably has a glass transition temperature (Tg) in the range of -70 to 0°C, preferably -60 to -10°C. By setting the glass transition temperature on 0°C at the highest, marked deterioration of adhesive force is obviated, and by setting the same on -70°C at the lowest, insufficient cohesion force in hot environment in summer or the like and squeeze-out of the adhesive are eliminated.

Moreover the average particle diameter of the polymer in the emulsion is in the range of 100 to 300 nm, preferably 150 to 250 nm. By setting the average particle diameter thereof on at least 100 nm, the emulsion type adhesive excellent in stability is assured, while gelation and thickening / thinning with the lapse of time become less liable to take place. By setting the same on at most 300 nm, the adhesive is made excellent in resistance to water and whitening and is free from whitening or inferior appearance at the time of being immersed in water.

The adhesive agent layer of the adhesive sheet according to the present invention is formed by applying coating of the emulsion type adhesive having the emulsion as the base which is obtained in the above-mentioned way. The emulsion type adhesive may contain at need crosslinking agents, defoaming agents, thickening agents, antioxidants, tackifier agents, preservatives, dyes, pigments and the like. Examples of the crosslinking agents include those of isocyanate base, epoxy base, melamine base, aziridine base, hydrazide base, oxazoline base, carbodiimide base, urea base, dialdehyde base and metal chelate base, respectively, metal alkoxiside base compounds and metal salts. Preferably, the amount of the crosslinking agents to be added is 0.1 to 10 parts by mass based on 100 parts by mass of an acrylic emulsion.

In the adhesive sheet according to the present invention, an adhesive agent layer is provided on either side of a polyvinyl chloride based resin film, said layer having a thickness in the range of usually 5 to 100 *µ*m, preferably 10 to 60 *µ*m. Examples of the method for providing the adhesive agent layer include for instance, a method comprising directly applying coating of an emulsion type adhesive to either side of a polyvinyl chloride based resin film by a conventional well known method to provide the adhesive agent layer ; a method comprising directly applying coating of an emulsion type adhesive onto a releasing sheet by a conventional well known method to provide the adhesive agent layer, and thereafter superposing the same on either side of a polyvinyl chloride based resin film to transfer the resultant adhesive agent layer ; and the like method.

As a method for applying an emulsion type adhesive, there are cited methods by using a gravure roll coater, reverse roll coater, kiss roll coater, dip roll coater, bar coater, knife coater and spray coater, respectively.

It is possible in the adhesive sheet according to the present invention to stick as desired, a releasing sheet onto the adhesive agent layer obtained in the foregoing manner. The releasing sheet is exemplified by that produced by applying coating of a releasing agent such as fluororesin and silicone resin onto laminate paper in which polyethylene resin or the like is laminated with paper including high density base paper such as glassine paper, clay coat paper, kraft paper or wood free paper, or onto a plastic film such as polyethylene terephthalate, polyethylene naphthalate and polyolefin so as to achieve a dry amount of about 0.3 to 3 g / m² by mass, and curing the coat by heat curing or ultraviolet curing so that a releasing layer is provided. The thickness of the releasing sheet is not specifically limited, but is usually in the range of 25 to 200 µ m. In the case of adopting a transfer method in forming the above-mentioned adhesive agent layer, the releasing sheet used therefor may remain stuck as such.

The adhesive sheet according to the present invention has preferably an adhesive forces after allowed to stand (1) at 80°C, 30% RH for 168 hours and (2) at 50°C, 95% RH for 168 hours being at least 80%, respectively of the adhesive force after allowed to stand at 23°C, 50% RH for 168 hours. The adhesive sheet maintaining such a high adhesive force even under high temperature or high humidity is preferably usable for marking sheet of retort foods and the like.

Moreover the adhesive sheet according thereto has preferably a haze value of at most 40 after sticking said sheet on an acrylate plate and being immersed in warm water at 40°C for 72 hours.

The adhesive sheet of the present invention is environmentally friendly because an emulsion type adhesive agent is used for the adhesive agent layer and volatile organic solvent is not used. Vinyl chloride based resin film is used for the support film and expensive urethane based resin film is not used in the present invention. Then the adhesive sheet of the present invention is inexpensive and is used industrially advantageously for masking films and masking tapes because the deterioration of the adhesive force from a plasticizer is minimized.

The working effects and advantages of the present invention are summarized in the following. In spite of its being an adhesive sheet in which use is made of a support film containing a plasticizer having high migratory properties and a low molecular weight, the adhesive sheet is characterized by being free from adherend contamination due to plasticizer migration from a support film or the like, imparted with excellent resistance to water and whitening, minimized in deterioration of the adhesive force with the lapse of time, besides environmentally friendly and at the same time, advantageous from the viewpoint of cost. Accordingly it is advantageously usable in industrial fields for marking films and masking tapes, specifically for advertisement stickers, display stickers, signboards, window displays, vehicles, various towers / vessels, piping, machinery and equipment for production plant; the masking tapes used for sticking on a non-coated region at the time of coating on automobiles and various machinery and equipment; and surface protection films of a variety of adherend. By maintaining a high adhesive force even under high temperature or high humidity, it is also preferably usable for marking sheet of retort foods and the like.

In what follows, the present invention will be described in more detail with reference to comparative examples and working examples, which however shall never limit the invention thereto.

The performances of the adhesive sheet obtained in each of the examples were evaluated in accordance with procedures as stated hereunder.

### (1) adhesive force

After preparation, an adhesive sheet was allowed to adhere to a stainless steel plate in an environment of 23°C, 50% RH, and peel off strength at 180 degrees was measured after 24 hours from sticking in accordance with the method for measuring adhesive force in JIS Z 0237. In addition, the same measurements were made after allowing to stand in under-mentioned conditions to determine preservation rate of the adhesive force in conditions 2 & 3 against the adhesive force in condition 1 :
Condition 1 : normal condition (after being allowed to stand for 168 hours in an environment of 23°C, 50% RH)
Condition 2 : after being allowed to stand for 168 hours in an environment of 80°C, 30% RH
Condition 3 : after being allowed to stand for 168 hours in an environment of 50°C, 95% RH

### (2) resistance to water and whitening

After the preparation of an adhesive sheet, samples thereof each measuring 50 mm by 50 mm were adhered to an acrylic plate {standard test plate manufactured by Japan Test Panel} at 23°C, 50% RH, allowed to stand for 24 hours, then allowed to stand in warm water at 40°C for 72 hours, and taken out from the warm water. Thus measurements were made of the haze values in accordance with JIS K 7105 by the use of a haze meter {manufactured by Japan Denshoku Kogyo Co., Ltd. under the trade name "Haze Meter NDH 2000 "}.

### Example 1

### (1) Emulsion polymerization

An emulsion liquid was prepared by mixing a mixture of ethylenically unsaturated monomers consisting of 70 parts by mass of n-butyl acrylate, 15 parts by mass of methyl methacrylate, 12 parts by mass of 2-ethylhexyl acrylate, 2 parts by mass of acrylic acid and one part by mass of diacetone acrylamide, with 3 parts by mass (solid content) of an anionic reactive emulsifier {manufactured by Asahi Denka Kogyo Co., Ltd. under the trade name " ADEKARESOAP SE10N"}, 125 parts by mass of ion exchanged water, 0.5 part by mass of ammonium persulfate and 0.3 part by mass of sodium secondary phosphate, and stirring the resultant emulsion liquid. Subsequently to the emulsion liquid was added 0.2 part by mass of a polymerization initiator (potassium persulfate), thereafter the emulsion liquid was heated at 80°C for 3 hours to obtain an acrylic emulsion containing a polymer having an average particle diameter of 200 nm.

### (2) Preparation of adhesive sheet

An adhesive sheet with a releasing sheet was prepared by mixing 100 parts by mass of the acrylic emulsion obtained in the preceding item (1) and one part by mass of adipic acid dihydrazide as the crosslinking agent, applying coating of the resultant mixture onto a silicone based releasing sheet {manufactured by Oji paper Co., Ltd. under the trade name " SP-11HL "} so that the thickness after drying was made to be 30 *µ* m, drying the releasing sheet at 90°C for one minute, thereafter superposing the same on a polyvinyl chloride based resin film having a thickness of 50 *µ*m { manufactured by Achiles Co., Ltd. under the trade name "FCZA2046 Tohmei 20PHR"} blending with dioctyl phthalate as the plasticizer. The measured results of adhesive force and resistance to water and whitening of the adhesive sheet thus obtained are given in Table 1.

### Example 2

The procedure in Example 1 was repeated to prepare an adhesive sheet except that the anionic reactive emulsifier {manufactured by Asahi Denka Kogyo Co., Ltd. under the trade name " ADEKARESOAP SE10N " } was used in an amount of 1.5 part instead of 3 parts by mass, and that simultaneous use was made of a nonionic non-reactive emulsifier in an amount of 0.5 part by mass (solid content) {manufactured by Kao Corporation under the trade name "Emulgen 920 "}. Thus measurements were made of adhesive force and resistance to water and whitening of the adhesive sheet thus obtained. The results are given in Table 1.

### Example 3

The procedure in Example 1 was repeated to prepare an adhesive sheet except that the mixture of ethylenically unsaturated monomers was made to be a mixture of 50 parts by mass of n-butyl acrylate, 15 parts by mass of methyl methacrylate, 32 parts by mass of 2-ethylhexyl acrylate, 2 parts by mass of acrylic acid and one part by mass of allyl acetoacetate. Thus measurements were made of adhesive force and resistance to water and whitening of the adhesive sheet thus obtained. The results are given in Table 1.

### Example 4

The procedure in Example 1 was repeated to prepare an adhesive sheet except that the mixture of ethylenically unsaturated monomers was made to be a mixture of 90 parts by mass of n-butyl acrylate, 7 parts by mass of methyl methacrylate, 2 parts by mass of acrylic acid and one part by mass of diacetone acrylamide. Thus measurements were made of adhesive force and resistance to water and whitening of the adhesive sheet thus obtained. The results are given in Table 1.

### Example 5

The procedure in Example 1 was repeated to prepare_an adhesive sheet except that the mixture of ethylenically unsaturated monomers was made to be a mixture of 77 parts by mass of n-butyl acrylate, 20 parts by mass of methyl methacrylate, 2 parts by mass of acrylic acid and one part by mass of diacetone acrylamide. Thus measurements were made of adhesive force and resistance to water and whitening of the adhesive sheet thus obtained. The results are given in Table 1.

### Example 6

The procedure in Example 1 was repeated to prepare an adhesive sheet except that the mixture of ethylenically unsaturated monomers was made to be a mixture of 83 parts by mass of n-butyl acrylate, 15 parts by mass of methyl methacrylate and 2 parts by mass of acrylic acid. Thus measurements were made of adhesive force and resistance to water and whitening of the adhesive sheet thus obtained. The results are given in Table 1.

### Example 7

The procedure in Example 1 was repeated to prepare an adhesive sheet except that the reactive emulsifier was used in an amount of 4.5 parts instead of 3 parts by mass. Thus measurements were made of adhesive force and resistance to water and whitening of the adhesive sheet thus obtained. The results are given in Table 1.

### Comparative Example 1

The procedure in Example 1 was repeated to prepare an adhesive sheet except that use was made of a nonionic non-reactive emulsifier alone {manufactured by Kao Corporation under the trade name " Emulgen 920 "} in an amount of 3 parts by mass in place of the anionic reactive emulsifier. Thus measurements were made of adhesive force and resistance to water and whitening of the adhesive sheet thus obtained. The results are given in Table 2.

### Comparative Example 2

The procedure in Example 1 was repeated to prepare an adhesive sheet except that the mixture of ethylenically unsaturated monomers was made to be a mixture of 30 parts by mass of n-butyl acrylate, 15 parts by mass of methyl methacrylate, 52 parts by mass of 2-ethylhexyl acrylate, 2 parts by mass of acrylic acid and one part by mass of diacetone acrylamide. Thus measurements were made of adhesive force and resistance to water and whitening of the adhesive sheet thus obtained. The results are given in Table 2.

### Comparative Example 3

The procedure in Example 1 was repeated to prepare an adhesive sheet except that the reactive emulsifier was used in an amount of 8.0 parts instead of 3 parts by mass. Thus measurements were made of adhesive force and resistance to water and whitening of the adhesive sheet thus obtained. The results are given in Table 2.

### Comparative Example 4

The procedure in Example 1 was repeated to prepare an adhesive sheet except that the mixture of ethylenically unsaturated monomers was made to be a mixture of 80 parts by mass of n-butyl acrylate, 5 parts by mass of methyl methacrylate, 12 parts by mass of 2-ethylhexyl acrylate, 2 parts by mass of acrylic acid and one part by mass of diacetone acrylamide. Thus measurements were made of adhesive force and resistance to water and whitening of the adhesive sheet thus obtained. The results are given in Table 2.

### Comparative Example 5

The procedure in Example 1 was repeated to prepare an adhesive sheet except that the emulsion was regulated to contain a polymer having an average particle diameter of 500 nm instead of 200 nm. Thus measurements were made of adhesive force and resistance to water and whitening of the adhesive sheet thus obtained. The results are given in Table 2.

### Comparative Example 6

The procedure in Example 1 was repeated to prepare an adhesive sheet except that the mixture of ethylenically unsaturated monomers was made to be a mixture of 42 parts by mass of n-butyl acrylate, 18 parts by mass of methyl methacrylate, 38 parts by mass of 2-ethylhexyl acrylate and 2 parts by mass of acrylic acid. Thus measurements were made of adhesive force and resistance to water and whitening of the adhesive sheet thus obtained. The results are given in Table 2.

**Table 1-1**

| | Number of Example | | | |
|---|---|---|---|---|
| | 1 | 2 | 3 | 4 |
| {Emulsion polymer} | | | | |
| Average particle diameter (nm) | 200 | 200 | 200 | 200 |
| Glass transition temperature (°C) | -38 | -38 | -41 | -44 |

| {Performance of adhesive sheet} | | | | |
|---|---|---|---|---|
| Adhesive force (peel off strength: N/25 mm) | | | | |
| ① 23°C 50%RH 168hr | 13.0 | 15.6 | 14.2 | 11.9 |
| ② 80°C 30%RH 168hr | 12.3 | 13.0 | 12.3 | 10.8 |
| ③ 50°C 95%RH;168hr | 10.5 | 14.2 | 11.5 | 9.9 |

| Preservation rate of adhesive force | | | | |
|---|---|---|---|---|
| ② / ① | 94.6 | 83.3 | 86.6 | 90.8 |
| ③ / ① | 80.8 | 91.0 | 81.0 | 83.2 |
| Resistance to water and whitening (haze) | 28.05 | 30.89 | 25.72 | 27.68 |

**Table 1 - 2**

| | Number of Example | | |
|---|---|---|---|
| | 5 | 6 | 7 |
| {Emulsion polymer} | | | |
| Average particle diameter (nm) | 200 | 200 | 200 |
| Glass transition temperature (°C) | -30 | -30 | -38 |

| {Performance of adhesive sheet} | | | |
|---|---|---|---|
| Adhesive force (peel off strength: N/25 mm) | | | |
| ① 23°C 50%RH ;168hr | 12.4 | 12.8 | 10.5 |
| ② 80°C 30%RH;168hr | 10.1 | 12.2 | 9.2 |
| ③ 50°C 95%RH 168hr | 10.0 | 10.3 | 8.5 |

| Preservation rate of adhesive force | | | |
|---|---|---|---|
| ② / ① | 81.3 | 95.0 | 87.6 |
| ③ / ① | 80.6 | 80.3 | 81.0 |
| Resistance to water and whitening (haze) | 32.54 | 35.37 | 38.50 |

**Table 2 - 1**

| | Number of Compa'tive Example | | |
|---|---|---|---|
| | 1 | 2 | 3 |
| {Emulsion polymer} | | | |
| Average particle diameter (nm) | 200 | 200 | 200 |
| Glass transition temperature (°C) | -38 | -45 | -38 |

| {Performance of adhesive sheet} | | | |
|---|---|---|---|
| Adhesive force (peel off strength: N/25 mm) | | | |
| ① 23°C 50%RH;168hr | 14.4 | 16.2 | 12.1 |
| ② 80°C 30%RH 168hr | 13.2 | 14.7 | 9.9 |
| ③ 50°C 95%RH 168hr | 12.1 | 12.7 | 7.6 |

| Preservation rate of adhesive force | | | |
|---|---|---|---|
| ② / ① | 91.7 | 90.7 | 81.8 |
| ③ / ① | 84.0 | 78.4 | 62.8 |
| Resistance to water and whitening (haze) | 45.12 | 23.69 | 54.31 |

**Table 2 - 2**

| | Number of Compa'tive Example | | |
|---|---|---|---|
| | 4 | 5 | 6 |
| {Emulsion polymer} | | | |
| Average particle diameter (nm) | 200 | 500 | 200 |
| Glass transition temperature (°C) | -48 | -38 | -42 |

| {Performance of adhesive sheet} | | | |
|---|---|---|---|
| Adhesive force (pel off strength: N/25 mm) | | | |
| ① 23°C 50%RH ;168hr | 15.9 | 13.8 | 13.9 |
| ② 80°C 30%RH ;168hr | 10.4 | 11.8 | 11.5 |
| ③ 50°C 95%RH 168hr | 9.4 | 12.5 | 10.6 |

| Preservation rate of adhesive force | | | |
|---|---|---|---|
| ② / ① | 65.4 | 85.5 | 82.4 |
| ③ / ① | 59.1 | 90.6 | 76.2 |
| Resistance to water and whitening (haze) | 30.59 | 45.21 | 27.4 |

## Claims

1. An adhesive sheet comprising an adhesive agent layer formed on a support film containing a plasticizer, and composed of an emulsion which is obtained by subjecting a mixture of ethylenically unsaturated monomers containing components (a), (b) and (c) to emulsion polymerization in the presence of a reactive emulsifier in an amount of 0.5 to 5.0 parts by mass based on 100 parts by mass of said mixture of ethylenically unsaturated monomers, and which comprises a polymer having an average particle diameter in the range of 100 to 300 nm, wherein said components contain the following :
(a) : butyl (meth)acrylate at least 48% by mass
(b) : methyl methacrylate 6 to 22% by mass
(c) : an ethylenically unsaturated carboxylic acid 0.5 to 5% by mass;

2. The adhesive sheet according to Claim 1, wherein the support film containing a plasticizer is a film of a polyvinyl chloride based resin.

3. The adhesive sheet according to Claim 1, which has adhesive forces after allowed to stand at 80°C, 30% RH for 168 hours and at 50°C, 95% RH for 168 hours being at least 80%, respectively of the adhesive force after allowed to stand at 23°C, 50% RH for 168 hours.

4. The adhesive sheet according to any of Claims 1 to 3, which has a haze value of at most 40 after sticking said sheet on an acrylate plate and being immersed in warm water at 40°C for 72 hours.
